# EUROPÄISCHE PATENTANMELDUNG

(11) **EP 4 623 670 A1**
(43) Veröffentlichungstag der Anmeldung: **01.10.2025**
(21) Anmeldenummer: 25161613.2
(22) Anmeldetag: 04.03.2025
(51) Int. Cl.: A01G 2/00, A01G 9/12

(54) **PFLANZSTABHALTEVORRICHTUNG**

(30) Priorität: 05.03.2024 DE 102024106344
(71) Anmelder: bellissa HAAS GmbH, 88285 Bodnegg-Rotheidlen (DE)
(72) Erfinder: Zapf, Timo, 88079 Kressbronn (DE)
(74) Vertreter: Daub, Thomas

(57) **Zusammenfassung**

Die Erfindung schlägt eine Pflanzstabhaltevorrichtung vor, mit einem Führungsrohr (12) zu einer Aufnahme eines Pflanzstabs (14), mit zumindest einem ersten Befestigungsquerträger (16), welcher direkt mit dem Führungsrohr (12) verbunden oder verbindbar ist, und welcher zumindest ein Fixierelement (18, 18') zu einer Befestigung in einem Untergrund aufweist, und mit zumindest einem zweiten Befestigungsquerträger (20), welcher zumindest ein Fixierelement (22, 22') zu einer Befestigung in einem Untergrund aufweist und welcher schwenkbar gegenüber dem ersten Befestigungsquerträger (16) gelagert ist.

## Beschreibung

### Stand der Technik

Die Erfindung betrifft eine Pflanzstabhaltevorrichtung.

Es sind bereits Pflanzstabhaltevorrichtungen vorgeschlagen worden.

Die Aufgabe der Erfindung besteht insbesondere darin, eine gattungsgemäße Vorrichtung mit verbesserten Eigenschaften hinsichtlich eines Komforts, insbesondere eines Nutzungskomforts, sowie einer Stabilität bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung schlägt eine Pflanzstabhaltevorrichtung vor, mit einem Führungsrohr zu einer Aufnahme eines Pflanzstabs, mit zumindest einem ersten Befestigungsquerträger, welcher direkt mit dem Führungsrohr verbunden oder verbindbar ist, und welcher zumindest ein Fixierelement zu einer Befestigung in einem Untergrund aufweist, und mit zumindest einem zweiten Befestigungsquerträger, welcher zumindest ein Fixierelement zu einer Befestigung in einem Untergrund aufweist und welcher schwenkbar gegenüber dem ersten Befestigungsquerträger gelagert ist. Vorzugsweise ist der zweite Befestigungsquerträger direkt an dem ersten Befestigungsquerträger angeordnet. Der erste Befestigungsquerträger und der zweite Befestigungsquerträger sind insbesondere benachbart angeordnet. Bevorzugt ist der zweite Befestigungsquerträger über dem ersten Befestigungsquerträger angeordnet. Besonders bevorzugt verläuft eine Haupterstreckungsrichtung des zweiten Befestigungsquerträgers in einer Betriebsstellung quer zu einer Haupterstreckungsrichtung des ersten Befestigungsquerträgers. Der erste Befestigungsquerträger und der zweite Befestigungsquerträger bilden in einer Betriebsstellung insbesondere ein Kreuz aus. Unter einer "Betriebsstellung" soll dabei insbesondere eine Stellung der Pflanzstabhaltevorrichtung verstanden werden, in welcher die Pflanzstabhaltevorrichtung dazu vorgesehen ist, einen Pflanzstab aufzunehmen und an einem Untergrund fixiert zu werden.

Unter einer "Pflanzstabhaltevorrichtung" soll in diesem Zusammenhang insbesondere eine Vorrichtung verstanden werden, welche zu einem Stützen und/oder zu einer Fixierung eines Pflanzstabs an einem Untergrund und/oder in einem Pflanzgefäß vorgesehen ist. Vorzugsweise ist die Pflanzstabhaltevorrichtung dazu vorgesehen, in oder an einem Untergrund und/oder einem Pflanzgefäß fixiert zu werden und gleichzeitig einen Aufnahmebereich zu einer Aufnahme eines Pflanzstabs bereitzustellen. Bevorzugt ist die Pflanzstabhaltevorrichtung zu einem stabilen Fixieren eines Pflanzstabs vorgesehen. Vorzugsweise ist der Pflanzstab getrennt von der Pflanzstabhaltevorrichtung ausgebildet. Der Pflanzstab dient insbesondere zu einer, insbesondere direkten, Befestigung an einer Pflanze, insbesondere zu einer Stabilisierung der Pflanze. Vorzugsweise wird die Pflanze zu einer Stabilisierung, insbesondere mehrmals an verschiedenen Positionen, mit dem Pflanzstab verbunden, beispielsweise mittels Klammern, Drähten oder dergleichen.

Die Pflanzstabhaltevorrichtung weist ein Führungsrohr auf, welches zu einer Aufnahme eines Pflanzstabs vorgesehen ist. Vorzugsweise ist das Führungsrohr von einem zylindrischen, insbesondere kreiszylindrischen Rohr gebildet. Das Führungsrohr weist insbesondere eine hohlzylindrische Form auf. Das Führungsrohr kann an den Enden geöffnet ausgebildet sein. Es wäre jedoch auch denkbar, dass das Führungsrohr an einem unteren Ende geschlossen ausgebildet ist. Das Führungsrohr kann zusätzlich Fixiermittel, wie beispielsweise eine Fixierschraube, zu einer Fixierung eines Pflanzstabs aufweisen. Unter einem "Befestigungsquerträger" soll in diesem Zusammenhang insbesondere ein Element verstanden werden, welches eine Haupterstreckungsrichtung quer, insbesondere zumindest im Wesentlichen senkrecht, zu einer Haupterstreckungsrichtung des Führungsrohrs aufweist. Der Befestigungsquerträger dient insbesondere als Stützausleger für das Führungsrohr zu einer Vermeidung eines Verkippens des Führungsrohrs. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt. Unter "quer" soll hier insbesondere eine Ausrichtung einer Richtung und/oder einer Achse relativ zu einer Bezugsrichtung und/oder einer Bezugsachse verstanden werden, wobei die Ausrichtung der Richtung und/oder der Achse zumindest verschieden von einer zumindest im Wesentlichen parallelen Ausrichtung zur Bezugsrichtung und/oder zur Bezugsachse ist und insbesondere windschief oder senkrecht zur Bezugsrichtung und/oder zur Bezugsachse ist. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist.

Ferner soll in diesem Zusammenhang unter einem "Fixierelement" insbesondere ein Element verstanden werden, welches zu einer direkten Fixierung des Befestigungsquerträgers an einem Untergrund und/oder an einem Pflanzgefäß vorgesehen ist. Vorzugsweise ist das Fixierelement dazu vorgesehen, den Befestigungsquerträger in einem Untergrund zu verankern. Es wäre jedoch auch denkbar, dass das Fixierelement dazu vorgesehen ist, den Befestigungsquerträger an einem Pflanzgefäß zu fixieren. Vorzugsweise ist das Fixierelement von einem Erdnagel, einem Hering, einem Schraubhering oder dergleichen gebildet. Es wäre jedoch auch eine andere, einem Fachmann als sinnvoll erscheinende Ausgestaltung des Fixierelements denkbar, wie beispielsweise als Klammer oder Schraubklemme.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung der Pflanzstabhaltevorrichtung kann insbesondere eine stabile und zuverlässige Befestigung eines Pflanzstabs ermöglicht werden. Es kann insbesondere eine vorteilhaft stabile Ausgestaltung der Pflanzstabhaltevorrichtung ermöglicht werden. Ferner können insbesondere Querkräfte vorteilhaft zuverlässig aufgenommen werden.

Ferner wird vorgeschlagen, dass der erste Befestigungsquerträger eine Ausnehmung aufweist, durch welche sich das Führungsrohr erstreckt, wobei sich eine Haupterstreckungsrichtung des Befestigungsquerträgers zumindest im Wesentlichen senkrecht zu einer Haupterstreckungsrichtung des Führungsrohrs erstreckt. Die Ausnehmung ist insbesondere von einer runden, an die Form des Führungsrohrs angepassten Ausnehmung gebildet. Das Führungsrohr erstreckt sich insbesondere durch die Ausnehmung hindurch, wobei zumindest ein wesentlicher Teil des Führungsrohrs ober- und unterhalb der Ausnehmung angeordnet ist. Es wird ferner vorgeschlagen, dass der erste Befestigungsquerträger fest mit dem Führungsrohr verbunden ist. Der erste Befestigungsquerträger ist über die Ausnehmung fest mit dem Führungsrohr verbunden. Der erste Befestigungsquerträger ist insbesondere stoffschlüssig mit dem Führungsrohr verbunden. Der erste Befestigungsquerträger ist insbesondere über eine Schweißverbindung mit dem Führungsrohr verbunden. Es wäre jedoch auch denkbar, dass der erste Befestigungsquerträger lediglich formschlüssig, wie beispielsweise über Befestigungslaschen, mit dem Führungsrohr verbunden ist. Unter "stoffschlüssig verbunden" soll insbesondere verstanden werden, dass die Masseteile durch atomare oder molekulare Kräfte zusammengehalten werden, wie beispielsweise beim Löten, Schweißen, Kleben und/oder Vulkanisieren. Unter "formschlüssig" soll insbesondere verstanden werden, dass aneinanderliegende Flächen von miteinander formschlüssig verbundenen Bauteilen eine in Normalenrichtung der Flächen wirkende Haltekraft aufeinander ausüben. Insbesondere befinden sich die Bauteile in einem geometrischen Eingriff miteinander. Dadurch kann insbesondere eine vorteilhafte Verbindung zwischen dem Befestigungsquerträger und dem Führungsrohr ermöglicht werden. Es kann ferner insbesondere eine vorteilhaft stabile Pflanzstabhaltevorrichtung bereitgestellt werden.

Des Weiteren wird vorgeschlagen, dass der zweite Befestigungsquerträger eine Ausnehmung aufweist, durch welche sich das Führungsrohr erstreckt und über welche der zweite Befestigungsquerträger schwenkbar gegenüber dem ersten Befestigungsquerträger und dem Führungsrohr gelagert ist. Die Ausnehmung ist insbesondere von einer runden, an die Form des Führungsrohrs angepassten Ausnehmung gebildet. Das Führungsrohr erstreckt sich insbesondere durch die Ausnehmung hindurch, wobei zumindest ein wesentlicher Teil des Führungsrohrs ober- und unterhalb der Ausnehmung angeordnet ist. Der zweite Befestigungsquerträger liegt insbesondere an dem ersten Befestigungsquerträger an. In der Betriebsstellung liegt der zweite Befestigungsquerträger insbesondere auf dem ersten Befestigungsquerträger auf. Das Führungsrohr bildet insbesondere eine Drehachse für den zweiten Befestigungsquerträger. Der zweite Befestigungsquerträger ist insbesondere um eine Drehachse schwenkbar gelagert, welche koaxial zu einer Mittelachse des Führungsrohrs verläuft. Der zweite Befestigungsquerträger ist insbesondere trennbar von dem Führungsrohr ausgebildet. Insbesondere kann das Führungsrohr aus der Ausnehmung des zweiten Befestigungsquerträgers herausgezogen werden. Dadurch kann insbesondere eine vorteilhaft einfache Montage ermöglicht werden. Ferner kann ein einfaches Verschwenken des zweiten Befestigungsquerträgers ermöglicht werden.

Es wird ferner vorgeschlagen, dass der erste Befestigungsquerträger einen plattenförmigen Grundkörper und zumindest eine an dem Grundkörper angeordnete Fixierlasche aufweist, die zu einer Fixierung des zweiten Befestigungsquerträgers relativ zu dem ersten Befestigungsquerträger vorgesehen ist. Die Fixierlasche dient insbesondere zu einer Fixierung des zweiten Befestigungsquerträgers in einer Betriebsstellung. Vorzugsweise ist der Grundkörper des Befestigungsquerträgers insbesondere von einer Metallplatte gebildet, wobei die Fixierlasche einstückig, insbesondere einteilig, mit dem Grundkörper verbunden ausgebildet ist. Vorzugsweise ist die Fixierlasche formstabil ausgebildet. Vorzugsweise bildet die Fixierlasche einen Spalt zwischen der Fixierlasche und dem plattenförmigen Grundkörper aus, der zu einer Aufnahme des zweiten Befestigungsquerträgers, insbesondere eines plattenförmigen Grundkörpers des zweiten Befestigungsquerträgers, vorgesehen ist. Bevorzugt weist der zweite Befestigungsquerträger ebenfalls einen plattenförmigen Grundkörper auf. Vorzugsweise weist die Fixierlasche eine Haupterstreckungsebene auf, welche sich parallel versetzt zu einer Haupterstreckungsebene des plattenförmigen Grundkörpers erstreckt. Bevorzugt ist die Fixierlasche aus einem Grundkörper herausgebogen. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Vorteilhaft soll unter einstückig auch einteilig verstanden werden. Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt. Unter einer "Haupterstreckungsebene" einer Baueinheit soll insbesondere eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft. Dadurch kann insbesondere vorteilhaft eine Fixierung des zweiten Befestigungsquerträgers relativ zu dem ersten Befestigungsquerträger ermöglicht werden. Es kann insbesondere eine vorteilhaft stabile Betriebsstellung ermöglicht werden.

Es wird weiter vorgeschlagen, dass die Fixierlasche des ersten Befestigungsquerträgers einen Formschlussfortsatz aufweist, der zu einer Fixierung des zweiten Befestigungsquerträgers relativ zu dem ersten Befestigungsquerträger dazu vorgesehen ist, in eine Ausnehmung des zweiten Befestigungsquerträgers einzugreifen. Vorzugsweise ist der Formschlussfortsatz dazu vorgesehen in einer Fixierstellung, insbesondere in der Betriebsstellung, in eine Ausnehmung des zweiten Befestigungsquerträgers einzugreifen. Der Formschlussfortsatz ist insbesondere dazu vorgesehen, den zweiten Befestigungsquerträger in einem zwischen der Fixierlasche und dem Grundkörper aufgenommenen Zustand zu fixieren. Es wird ferner vorgeschlagen, dass der Formschlussfortsatz der Fixierlasche des ersten Befestigungsquerträgers von einer materiellen Erhebung, insbesondere Ausbeulung, gebildet ist. Vorzugsweise ist der Formschlussfortsatz von einer halbkugelförmigen Ausbeulung in der Fixierlasche gebildet. Es wäre jedoch auch eine andere, einem Fachmann als sinnvoll erscheinende Ausgestaltung des Formschlussfortsatzes denkbar. Bevorzugt ist der Formschlussfortsatz in Richtung der Lücke gerichtet. Der Formschlussfortsatz ist insbesondere mittig in die Fixierlasche eingebracht. Dadurch kann insbesondere vorteilhaft eine Fixierung des zweiten Befestigungsquerträgers relativ zu dem ersten Befestigungsquerträger ermöglicht werden. Es kann insbesondere eine vorteilhaft stabile Betriebsstellung ermöglicht werden.

Ferner wird vorgeschlagen, dass die Fixierlasche des ersten Befestigungsquerträgers zumindest im Wesentlichen parallel, versetzt zu dem Grundkörper angeordnet ist, wobei der zweite Befestigungsquerträger in einem fixierten Zustand zumindest teilweise zwischen dem Grundkörper und der Fixierlasche aufgenommen ist. Vorzugsweise bildet die Fixierlasche einen Spalt, insbesondere einen versetzten Spalt, zwischen der Fixierlasche und dem plattenförmigen Grundkörper aus, der zu einer Aufnahme des zweiten Befestigungsquerträgers, insbesondere eines plattenförmigen Grundkörpers des zweiten Befestigungsquerträgers, vorgesehen ist. Bevorzugt weist der zweite Befestigungsquerträger ebenfalls einen plattenförmigen Grundkörper auf. Vorzugsweise weist die Fixierlasche eine Haupterstreckungsebene auf, welche sich parallel versetzt zu einer Haupterstreckungsebene des plattenförmigen Grundkörpers erstreckt. Bevorzugt ist die Fixierlasche aus einem Grundkörper herausgebogen. Der plattenförmige Grundkörper und die Fixierlasche bestehen insbesondere aus einem Metallblech. Dadurch kann insbesondere vorteilhaft eine Fixierung des zweiten Befestigungsquerträgers relativ zu dem ersten Befestigungsquerträger ermöglicht werden. Es kann insbesondere eine vorteilhaft stabile Betriebsstellung ermöglicht werden.

Des Weiteren wird vorgeschlagen, dass die Fixierlasche des ersten Befestigungsquerträgers zumindest eine, eine Einführschräge ausbildende, abgeknickte Ecke aufweist. Vorzugsweise ist zumindest eine freie, einem Verbindungspunkt zu dem Grundkörper abgewandte Ecke der Fixierlasche teilweise umgebogen, insbesondere in einem Winkel von zumindest annähernd 45°. Die abgeknickte Ecke dient insbesondere dazu, ein Einführen bzw. Einschwenken des zweiten Befestigungsquerträgers in den Spalt zwischen der Fixierlasche und dem Grundkörper des ersten Befestigungsquerträgers zu erleichtern. Die Ecke ist insbesondere in eine von dem Grundkörper des ersten Befestigungsquerträgers wegweisende Richtung abgeknickt. Es ist insbesondere eine der Drehachse des zweiten Befestigungsquerträgers zugewandte Ecke der Fixierlasche des ersten Befestigungsquerträgers abgeknickt. Dadurch kann insbesondere ein vorteilhaft einfaches und zuverlässiges Verschwenken des zweiten Befestigungsquerträgers in die Betriebsstellung ermöglicht werden. Es kann insbesondere zuverlässig ein Verkanten vermieden werden.

Es wird ferner vorgeschlagen, dass der zweite Befestigungsquerträger einen plattenförmigen Grundkörper und zumindest eine an dem Grundkörper angeordnete Fixierlasche aufweist, die zu einer Fixierung des ersten Befestigungsquerträgers relativ zu dem zweiten Befestigungsquerträger vorgesehen ist. Die Fixierlasche des zweiten Befestigungsquerträgers dient insbesondere zu einer Fixierung des ersten Befestigungsquerträgers in einer Betriebsstellung. Vorzugsweise ist der Grundkörper des zweiten Befestigungsquerträgers insbesondere von einer Metallplatte gebildet, wobei die Fixierlasche einstückig, insbesondere einteilig, mit dem Grundkörper verbunden ausgebildet ist. Vorzugsweise ist die Fixierlasche des zweiten Befestigungsquerträgers formstabil ausgebildet. Vorzugsweise bildet die Fixierlasche einen Spalt zwischen der Fixierlasche und dem plattenförmigen Grundkörper aus, der zu einer Aufnahme des ersten Befestigungsquerträgers, insbesondere des plattenförmigen Grundkörpers des ersten Befestigungsquerträgers, vorgesehen ist. Vorzugsweise weist die Fixierlasche des zweiten Befestigungsquerträgers eine Haupterstreckungsebene auf, welche sich parallel versetzt zu einer Haupterstreckungsebene des plattenförmigen Grundkörpers erstreckt. Bevorzugt ist die Fixierlasche aus einem Grundkörper herausgebogen. Vorzugsweise ist die Fixierlasche des zweiten Befestigungsquerträgers zumindest im Wesentlichen parallel, versetzt zu dem Grundkörper angeordnet, wobei der erste Befestigungsquerträger in einem fixierten Zustand zumindest teilweise zwischen dem Grundkörper und der Fixierlasche aufgenommen ist. Bevorzugt ist in einer Fixierstellung der erste Befestigungsquerträger in einem Spalt zwischen der Fixierlasche und dem Grundkörper des zweiten Befestigungsquerträgers angeordnet und der zweite Befestigungsquerträger in einem Spalt zwischen der Fixierlasche und dem Grundkörper des ersten Befestigungsquerträgers angeordnet. Dadurch kann insbesondere vorteilhaft eine Fixierung des zweiten Befestigungsquerträgers relativ zu dem ersten Befestigungsquerträger ermöglicht werden. Es kann insbesondere eine vorteilhaft stabile Betriebsstellung ermöglicht werden.

Es wird weiter vorgeschlagen, dass der plattenförmige Grundkörper und die Fixierlasche des zweiten Befestigungsquerträgers zumindest im Wesentlichen identisch zu dem plattenförmigen Grundkörper und der Fixierlasche des ersten Befestigungsquerträgers ausgebildet sind. Vorzugsweise sind der plattenförmige Grundkörper und die Fixierlasche des zweiten Befestigungsquerträgers identisch zu dem plattenförmigen Grundkörper und der Fixierlasche des ersten Befestigungsquerträgers ausgebildet. Unter "zumindest im Wesentlichen" soll in diesem Zusammenhang insbesondere verstanden werden, dass eine Abweichung von einer vorgegebenen Form insbesondere weniger als 25%, vorzugsweise weniger als 10% und besonders bevorzugt weniger als 5% eines Volumens gegenüber der vorgegebenen Form beträgt. Dadurch kann insbesondere eine Anzahl verschiedener Bauteile vorteilhaft gering gehalten werden.

Ferner wird vorgeschlagen, dass das zumindest eine Fixierelement des ersten Befestigungsquerträgers und das zumindest eine Fixierelement des zweiten Befestigungsquerträgers jeweils von einem Ankerstab, insbesondere einem Erdspieß, gebildet sind. Vorzugsweise weisen der erste Befestigungsquerträger und der zweite Befestigungsquerträger jeweils zwei Fixierelemente auf, die jeweils an gegenüberliegenden Enden des jeweiligen Grundkörpers angeordnet sind. Vorzugsweise stehen die Fixierelemente jeweils senkrecht zu einer Haupterstreckungsebene des jeweiligen Grundkörpers von dem Grundkörper des jeweiligen Befestigungsquerträgers ab. Die Fixierelemente des ersten Befestigungsquerträgers stehen jeweils in dieselbe Richtung von dem Grundkörper des ersten Befestigungsquerträgers ab. Die Fixierelemente des zweiten Befestigungsquerträgers stehen jeweils in dieselbe Richtung von dem Grundkörper des zweiten Befestigungsquerträgers ab. In einer Betriebsstellung erstrecken sich alle Fixierelemente parallel in dieselbe Richtung, wobei ein Grundkörper des ersten Befestigungsquerträgers gegenüber einem Grundkörper des zweiten Befestigungsquerträgers andersherum angeordnet ist. Bevorzugt weist die Pflanzstabhaltevorrichtung eine Verstaustellung auf, in welcher die Fixierelemente des ersten Befestigungsquerträgers und die Fixierelemente des zweiten Befestigungsquerträgers in entgegengesetzte Richtungen abstehen. In der Verstaustellung ist der Grundkörper des zweiten Befestigungsquerträgers, insbesondere bezogen auf die zumindest im Wesentlichen identische Form des Grundkörpers, identisch zu dem Grundkörper des ersten Befestigungsquerträgers angeordnet.

Die erfindungsgemäße Pflanzstabhaltevorrichtung soll hierbei nicht auf die oben beschriebene Anwendung und Ausführungsform beschränkt sein. Insbesondere kann die erfindungsgemäße Pflanzstabhaltevorrichtung zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Pflanzstabhaltevorrichtung mit einem Führungsrohr, einem ersten Befestigungsquerträger und einem zweiten Befestigungsquerträger in einer Betriebsstellung in einer schematischen Darstellung,
- Fig. 2: die erfindungsgemäße Pflanzstabhaltevorrichtung mit dem Führungsrohr, dem ersten Befestigungsquerträger und dem zweiten Befestigungsquerträger in einer Verstaustellung in einer schematischen Darstellung,

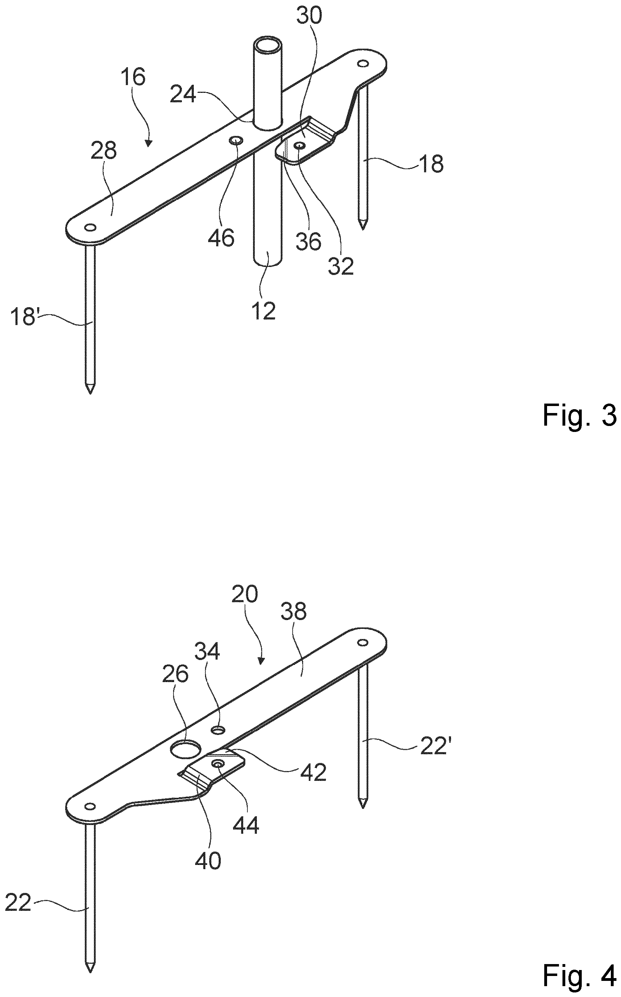

- Fig. 3: das Führungsrohr und den ersten Befestigungsquerträger in einer schematischen Darstellung und
- Fig. 4: de zweiten Befestigungsquerträger in einer schematischen Darstellung.

### Beschreibung des Ausführungsbeispiels

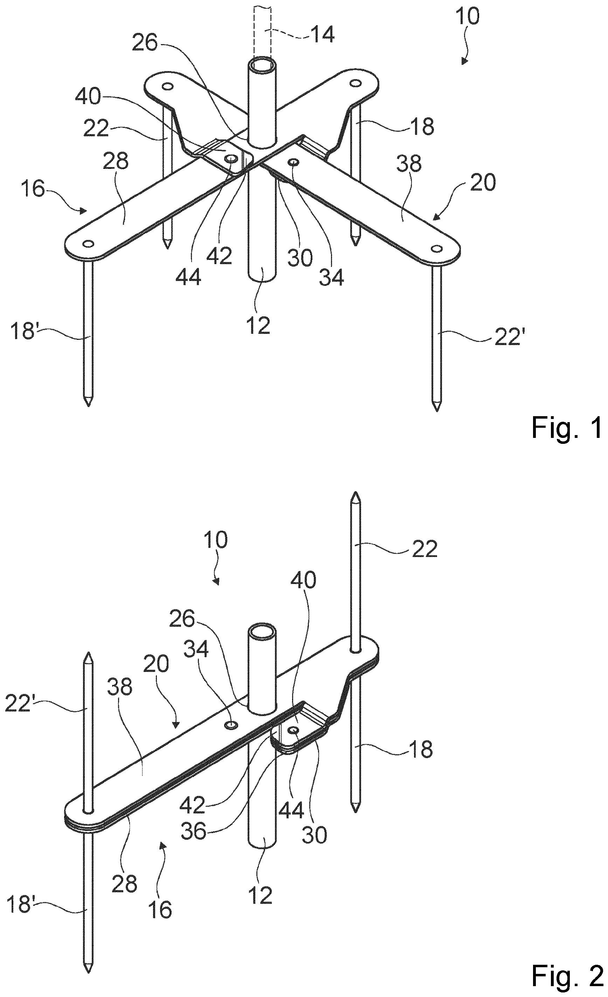

Die Figur 1 zeigt eine Pflanzstabhaltevorrichtung 10 mit einem Führungsrohr 12, einem ersten Befestigungsquerträger 16 und einem zweiten Befestigungsquerträger 20 in einer Betriebsstellung.

Das Führungsrohr 12 ist zu einer Aufnahme eines Pflanzstabs 14 vorgesehen. Das Führungsrohr 12 ist von einem zylindrischen Rohr gebildet. Das Führungsrohr 12 ist von einem kreiszylindrischen Rohr gebildet. Das Führungsrohr 12 weist eine hohlzylindrische Form auf. Das Führungsrohr 12 ist an den Enden geöffnet ausgebildet. Es wäre jedoch auch denkbar, dass das Führungsrohr 12 an einem unteren Ende geschlossen ausgebildet ist. Das Führungsrohr 12 kann zusätzlich Fixiermittel, wie beispielsweise eine Fixierschraube, zu einer Fixierung eines Pflanzstabs 14 aufweisen. Das Führungsrohr 12 ist zu einer vertikalen Anordnung vorgesehen.

Der erste Befestigungsquerträger 16 ist direkt mit dem Führungsrohr 12 verbunden oder verbindbar. Der erste Befestigungsquerträger 16 ist direkt mit dem Führungsrohr 12 verbunden. Der erste Befestigungsquerträger 16 weist einen plattenförmigen Grundkörper 28 und zumindest ein Fixierelement 18, 18' zu einer Befestigung in einem Untergrund auf. Der erste Befestigungsquerträger 16 weist zwei Fixierelemente 18, 18' auf, die an gegenüberliegenden Enden an dem Grundkörper 28 angeordnet sind. Die Fixierelemente 18, 18' stehen jeweils senkrecht zu einer Haupterstreckungsebene des Grundkörpers 28 von dem Grundkörper 28 des ersten Befestigungsquerträgers 16 in dieselbe Richtung ab. Die Fixierelemente 18, 18' des ersten Befestigungsquerträgers 16 sind jeweils von einem Ankerstab, insbesondere einem Erdspieß, gebildet. Der Grundkörper 28 ist von einer Metallplatte gebildet. Es wäre jedoch auch eine andere, einem Fachmann als sinnvoll erscheinende Ausgestaltung des Grundkörpers 28 denkbar. Der erste Befestigungsquerträger 16 weist ferner eine Ausnehmung 24 auf, durch welche sich das Führungsrohr 12 erstreckt, wobei sich eine Haupterstreckungsrichtung des Befestigungsquerträgers 16 zumindest im Wesentlichen senkrecht zu einer Haupterstreckungsrichtung des Führungsrohrs 12 erstreckt. Die Ausnehmung 24 ist in den Grundkörper 28 eingebracht. Die Ausnehmung 24 ist leicht außermittig in den Grundkörper 28 eingebracht. Die Ausnehmung 24 ist von einer runden Ausnehmung 24 gebildet. Die Ausnehmung 24 ist von einer runden, an die Form des Führungsrohrs 12 angepassten Ausnehmung 24 gebildet. Das Führungsrohr 12 erstreckt sich durch die Ausnehmung 24 hindurch, wobei zumindest ein wesentlicher Teil des Führungsrohrs 12 ober- und unterhalb der Ausnehmung 24 angeordnet ist. Das Führungsrohr 12 ist ebenfalls dazu vorgesehen teilweise in einen Untergrund, wie insbesondere ein Erdreich, eingebracht zu werden. Der erste Befestigungsquerträger 16 ist fest mit dem Führungsrohr 12 verbunden. Der erste Befestigungsquerträger 16 ist über die Ausnehmung 24 in dem Grundkörper 28 fest mit dem Führungsrohr 12 verbunden. Der erste Befestigungsquerträger 16 ist stoffschlüssig mit dem Führungsrohr 12 verbunden. Der Grundkörper 28 des ersten Befestigungsquerträgers 16 ist über eine Schweißverbindung mit dem Führungsrohr 12 verbunden.

Der zweite Befestigungsquerträger 20 ist direkt mit dem Führungsrohr 12 verbindbar. Der zweite Befestigungsquerträger 20 ist schwenkbar gegenüber dem ersten Befestigungsquerträger 16 gelagert. Der zweite Befestigungsquerträger 20 weist einen plattenförmigen Grundkörper 38 und zumindest ein Fixierelement 22, 22' zu einer Befestigung in einem Untergrund auf. Der zweite Befestigungsquerträger 20 weist zwei Fixierelemente 22, 22' auf, die an gegenüberliegenden Enden an dem Grundkörper 38 angeordnet sind. Die Fixierelemente 22, 22' stehen jeweils senkrecht zu einer Haupterstreckungsebene des Grundkörpers 38 von dem Grundkörper 38 des zweiten Befestigungsquerträgers 20 in dieselbe Richtung ab. Die Fixierelemente 22, 22' des zweiten Befestigungsquerträgers 20 sind jeweils von einem Ankerstab, insbesondere einem Erdspieß, gebildet. Der Grundkörper 38 ist von einer Metallplatte gebildet. Es wäre jedoch auch eine andere, einem Fachmann als sinnvoll erscheinende Ausgestaltung des Grundkörpers 38 denkbar. Der zweite Befestigungsquerträger 20 weist ferner eine Ausnehmung 26 auf, durch welche sich das Führungsrohr 12 erstreckt und über welche der zweite Befestigungsquerträger 20 schwenkbar gegenüber dem ersten Befestigungsquerträger 16 und dem Führungsrohr 12 gelagert ist. Die Ausnehmung 26 ist in den Grundkörper 38 eingebracht. Die Ausnehmung 26 ist leicht außermittig in den Grundkörper 38 eingebracht. Die Ausnehmung 26 ist von einer runden Ausnehmung 26 gebildet. Die Ausnehmung 26 ist von einer runden, an die Form des Führungsrohrs 12 angepassten Ausnehmung 26 gebildet. Das Führungsrohr 12 erstreckt sich durch die Ausnehmung 26 hindurch. Der zweite Befestigungsquerträger 20 liegt an dem ersten Befestigungsquerträger 16 an. In der Betriebsstellung liegt der zweite Befestigungsquerträger 20 von unten an dem ersten Befestigungsquerträger 16 an. Das Führungsrohr 12 bildet eine Drehachse für den zweiten Befestigungsquerträger 20. Der zweite Befestigungsquerträger 20 ist um eine Drehachse schwenkbar gelagert, welche koaxial zu einer Mittelachse des Führungsrohrs 12 verläuft. Der zweite Befestigungsquerträger 20 ist insbesondere trennbar von dem Führungsrohr 12 ausgebildet.

Der erste Befestigungsquerträger 16 weist den plattenförmigen Grundkörper 28 und eine an dem Grundkörper 28 angeordnete Fixierlasche 30 auf, die zu einer Fixierung des zweiten Befestigungsquerträgers 20 relativ zu dem ersten Befestigungsquerträger 16 vorgesehen ist. Die Fixierlasche 30 des ersten Befestigungsquerträgers 16 ist zumindest im Wesentlichen parallel, versetzt zu dem Grundkörper 28 angeordnet, wobei der zweite Befestigungsquerträger 20 in einem fixierten Zustand zumindest teilweise zwischen dem Grundkörper 28 und der Fixierlasche 30 aufgenommen ist. Die Fixierlasche 30 weist eine Haupterstreckungsebene auf, welche sich parallel versetzt zu einer Haupterstreckungsebene des plattenförmigen Grundkörpers 28 erstreckt. Die Fixierlasche 30 ist gegenüber dem Grundkörper 28 nach unten versetzt. Die Fixierlasche 30 dient zu einer Fixierung des zweiten Befestigungsquerträgers 20 in einer Betriebsstellung. Die Fixierlasche 30 ist einstückig, insbesondere einteilig, mit dem Grundkörper 28 verbunden ausgebildet. Die Fixierlasche 30 und der Grundkörper 28 sind aus einem Teil, insbesondere einem Metallblech, geformt. Die Fixierlasche 30 ist aus einem Grundkörper 28 herausgebogen. Die Fixierlasche 30 ist formstabil ausgebildet. Die Fixierlasche 30 bildet einen Spalt zwischen der Fixierlasche 30 und dem plattenförmigen Grundkörper 28 aus, der zu einer Aufnahme des zweiten Befestigungsquerträgers 20, insbesondere dem plattenförmigen Grundkörper 38 des zweiten Befestigungsquerträgers 20, vorgesehen ist. Die Fixierlasche 30 des ersten Befestigungsquerträgers 16 weist eine, eine Einführschräge ausbildende, abgeknickte Ecke 36 auf. Die freie, einem Verbindungspunkt zu dem Grundkörper 28 abgewandten Ecke 36 der Fixierlasche 30 ist teilweise umgebogen, insbesondere in einem Winkel von zumindest annähernd 45°. Die abgeknickte Ecke 36 dient dazu, ein Einführen bzw. Einschwenken des zweiten Befestigungsquerträgers 20 in den Spalt zwischen der Fixierlasche 30 und dem Grundkörper 28 des ersten Befestigungsquerträgers 16 zu erleichtern. Die Ecke 36 ist in eine von dem Grundkörper 28 des ersten Befestigungsquerträgers 16 wegweisende Richtung abgeknickt. Es ist die der Drehachse des zweiten Befestigungsquerträgers 20 zugewandte Ecke 36 der Fixierlasche 30 des ersten Befestigungsquerträgers 16 abgeknickt.

Die Fixierlasche 30 des ersten Befestigungsquerträgers 16 weist ferner einen Formschlussfortsatz 32 auf, der zu einer Fixierung des zweiten Befestigungsquerträgers 20 relativ zu dem ersten Befestigungsquerträger 16 dazu vorgesehen ist, in eine Ausnehmung 34 des zweiten Befestigungsquerträgers 20 einzugreifen. Der Formschlussfortsatz 32 ist dazu vorgesehen in einer Fixierstellung, insbesondere in der Betriebsstellung, in eine Ausnehmung 34 des zweiten Befestigungsquerträgers 20 einzugreifen. Die Ausnehmung 34 ist in dem Grundkörper 38 des zweiten Befestigungsquerträgers 20 angeordnet. Die Ausnehmung 34 ist von einer Materialvertiefung, insbesondere einer Ausbeulung in dem Grundkörper 38 gebildet. Der Formschlussfortsatz 32 ist dazu vorgesehen, den zweiten Befestigungsquerträger 20 in einem zwischen der Fixierlasche 30 und dem Grundkörper 28 aufgenommenen Zustand zu fixieren. Der Formschlussfortsatz 32 der Fixierlasche 30 des ersten Befestigungsquerträgers 16 ist von einer materiellen Erhebung, insbesondere Ausbeulung, gebildet. Der Formschlussfortsatz 32 ist von einer halbkugelförmigen Ausbeulung in der Fixierlasche 30 gebildet. Der Formschlussfortsatz 32 ist in Richtung des Spalts gerichtet. Der Formschlussfortsatz 32 ist mittig in die Fixierlasche 30 eingebracht.

Der zweite Befestigungsquerträger 20 weist den plattenförmigen Grundkörper 38 und eine an dem Grundkörper 38 angeordnete Fixierlasche 40 auf, die zu einer Fixierung des ersten Befestigungsquerträgers 16 relativ zu dem zweiten Befestigungsquerträger 20 vorgesehen ist. Die Fixierlasche 40 des zweiten Befestigungsquerträgers 20 ist zumindest im Wesentlichen parallel, versetzt zu dem Grundkörper 38 angeordnet, wobei der erste Befestigungsquerträger 16 in einem fixierten Zustand zumindest teilweise zwischen dem Grundkörper 38 und der Fixierlasche 40 aufgenommen ist. Die Fixierlasche 40 weist eine Haupterstreckungsebene auf, welche sich parallel versetzt zu einer Haupterstreckungsebene des plattenförmigen Grundkörpers 38 erstreckt. Die Fixierlasche 40 ist gegenüber dem Grundkörper 38 in der Betriebsstellung nach oben versetzt. Die Fixierlasche 40 dient zu einer Fixierung des ersten Befestigungsquerträgers 16 in einer Betriebsstellung. Die Fixierlasche 40 ist einstückig, insbesondere einteilig, mit dem Grundkörper 38 verbunden ausgebildet. Die Fixierlasche 40 und der Grundkörper 38 sind aus einem Teil, insbesondere einem Metallblech, geformt. Die Fixierlasche 40 ist aus einem Grundkörper 38 herausgebogen. Die Fixierlasche 40 ist formstabil ausgebildet. Die Fixierlasche 40 bildet einen Spalt zwischen der Fixierlasche 40 und dem plattenförmigen Grundkörper 38 aus, der zu einer Aufnahme des ersten Befestigungsquerträgers 16, insbesondere dem plattenförmigen Grundkörper 28 des ersten Befestigungsquerträgers 16, vorgesehen ist. Die Fixierlasche 40 des zweiten Befestigungsquerträgers 20 weist eine, eine Einführschräge ausbildende, abgeknickte Ecke 42 auf. Die freie, einem Verbindungspunkt zu dem Grundkörper 38 abgewandte Ecke 42 der Fixierlasche 40 ist teilweise umgebogen, insbesondere in einem Winkel von zumindest annähernd 45°. Die abgeknickte Ecke 42 dient dazu, ein Einführen bzw. Einschwenken des ersten Befestigungsquerträgers 16 in den Spalt zwischen der Fixierlasche 40 und dem Grundkörper 38 des zweiten Befestigungsquerträgers 20 zu erleichtern. Die Ecke 42 ist in eine von dem Grundkörper 38 des zweiten Befestigungsquerträgers 20 wegweisende Richtung abgeknickt.

Die Fixierlasche 40 des zweiten Befestigungsquerträgers 20 weist ferner einen Formschlussfortsatz 44 auf, der zu einer Fixierung des ersten Befestigungsquerträgers 16 relativ zu dem zweiten Befestigungsquerträger 20 dazu vorgesehen ist, in eine Ausnehmung 46 des ersten Befestigungsquerträgers 16 einzugreifen. Der Formschlussfortsatz 44 ist dazu vorgesehen in einer Fixierstellung, insbesondere in der Betriebsstellung, in eine Ausnehmung 46 des ersten Befestigungsquerträgers 16 einzugreifen. Die Ausnehmung 46 ist in dem Grundkörper 28 des ersten Befestigungsquerträgers 16 angeordnet. Die Ausnehmung 46 ist von einer Materialvertiefung, insbesondere einer Ausbeulung in dem Grundkörper 28 gebildet. Der Formschlussfortsatz 44 ist dazu vorgesehen, den ersten Befestigungsquerträger 16 in einem zwischen der Fixierlasche 40 und dem Grundkörper 38 aufgenommenen Zustand zu fixieren. Der Formschlussfortsatz 44 der Fixierlasche 40 des zweiten Befestigungsquerträgers 20 ist von einer materiellen Erhebung, insbesondere Ausbeulung, gebildet. Der Formschlussfortsatz 44 ist von einer halbkugelförmigen Ausbeulung in der Fixierlasche 40 gebildet. Der Formschlussfortsatz 44 ist in Richtung des Spalts gerichtet. Der Formschlussfortsatz 44 ist mittig in die Fixierlasche 40 eingebracht.

Der plattenförmige Grundkörper 38 und die Fixierlasche 40 des zweiten Befestigungsquerträgers 20 sind zumindest im Wesentlichen identisch zu dem plattenförmigen Grundkörper 28 und der Fixierlasche 30 des ersten Befestigungsquerträgers 16 ausgebildet. Der plattenförmige Grundkörper 38 und die Fixierlasche 40 des zweiten Befestigungsquerträgers 20 sind identisch zu dem plattenförmigen Grundkörper 28 und der Fixierlasche 30 des ersten Befestigungsquerträgers 16 ausgebildet.

Die Pflanzstabhaltevorrichtung 10 weist eine Betriebsstellung (Figur 1) und eine Verstaustellung (Figur 2) auf. Die Verstaustellung dient insbesondere zu einem kompakten Transport oder als eine kompakte Verkaufsstellung. In der Verstaustellung stehen die Fixierelemente 18, 18' des ersten Befestigungsquerträgers 16 und die Fixierelemente 22, 22' des zweiten Befestigungsquerträgers 20 in entgegengesetzte Richtungen ab, wobei der Grundkörper 38 des zweiten Befestigungsquerträgers 20 bündig und deckungsgleich auf dem Grundkörper 28 des ersten Befestigungsquerträgers 16 aufliegt. Der zweite Befestigungsquerträger 20 wird für die Verstaustellung mit der Ausnehmung 26 von oben falsch herum auf das Führungsrohr 12 geschoben. Für die Betriebsstellung wird der zweite Befestigungsquerträger 20 in einem ersten Schritt mit der Ausnehmung 26 von unten auf das Führungsrohr 12 geschoben und anschließend in einem zweiten Schritt verdreht, sodass die Fixierlaschen 30, 40 jeweils in Eingriff mit den Ausnehmungen 34, 46 kommen.

### Bezugszeichenliste

- 10: Pflanzstabhaltevorrichtung
- 12: Führungsrohr
- 14: Pflanzstab
- 16: Befestigungsquerträger
- 18: Fixierelement
- 20: Befestigungsquerträger
- 22: Fixierelement
- 24: Ausnehmung
- 26: Ausnehmung
- 28: Grundkörper
- 30: Fixierlasche
- 32: Formschlussfortsatz
- 34: Ausnehmung
- 36: Ecke
- 38: Grundkörper
- 40: Fixierlasche
- 42: Ecke
- 44: Formschlussfortsatz
- 46: Ausnehmung

## Patentansprüche

1. Pflanzstabhaltevorrichtung mit einem Führungsrohr (12) zu einer Aufnahme eines Pflanzstabs (14), mit zumindest einem ersten Befestigungsquerträger (16), welcher direkt mit dem Führungsrohr (12) verbunden oder verbindbar ist, und welcher zumindest ein Fixierelement (18, 18') zu einer Befestigung in einem Untergrund aufweist, und mit zumindest einem zweiten Befestigungsquerträger (20), welcher zumindest ein Fixierelement (22, 22') zu einer Befestigung in einem Untergrund aufweist und welcher schwenkbar gegenüber dem ersten Befestigungsquerträger (16) gelagert ist.

2. Pflanzstabhaltevorrichtung nach Anspruch 1,
**dadurch gekennzeichnet, dass**
der erste Befestigungsquerträger (16) eine Ausnehmung (24) aufweist, durch welche sich das Führungsrohr (12) erstreckt, wobei sich eine Haupterstreckungsrichtung des Befestigungsquerträgers (16) zumindest im Wesentlichen senkrecht zu einer Haupterstreckungsrichtung des Führungsrohrs (12) erstreckt.

3. Pflanzstabhaltevorrichtung nach Anspruch 1 oder 2,
**dadurch gekennzeichnet, dass**
der erste Befestigungsquerträger (16) fest mit dem Führungsrohr (12) verbunden ist.

4. Pflanzstabhaltevorrichtung nach einem der vorhergehenden Ansprüche, **dadurch gekennzeichnet, dass**
der zweite Befestigungsquerträger (20) eine Ausnehmung (26) aufweist, durch welche sich das Führungsrohr (12) erstreckt und über welche der zweite Befestigungsquerträger (20) schwenkbar gegenüber dem ersten Befestigungsquerträger (16) und dem Führungsrohr (12) gelagert ist.

5. Pflanzstabhaltevorrichtung nach einem der vorhergehenden Ansprüche, **dadurch gekennzeichnet, dass**
der erste Befestigungsquerträger (16) einen plattenförmigen Grundkörper (28) und zumindest eine an dem Grundkörper (28) angeordnete Fixierlasche (30) aufweist, die zu einer Fixierung des zweiten Befestigungsquerträgers (20) relativ zu dem ersten Befestigungsquerträger (16) vorgesehen ist.

6. Pflanzstabhaltevorrichtung nach Anspruch 5,
**dadurch gekennzeichnet, dass**
die Fixierlasche (30) des ersten Befestigungsquerträgers (16) einen Formschlussfortsatz (32) aufweist, der zu einer Fixierung des zweiten Befestigungsquerträgers (20) relativ zu dem ersten Befestigungsquerträger (16) dazu vorgesehen ist, in eine Ausnehmung (34) des zweiten Befestigungsquerträgers (20) einzugreifen.

7. Pflanzstabhaltevorrichtung nach Anspruch 6,
**dadurch gekennzeichnet, dass**
der Formschlussfortsatz (32) der Fixierlasche (30) des ersten Befestigungsquerträgers (16) von einer materiellen Erhebung, insbesondere Ausbeulung, gebildet ist.

8. Pflanzstabhaltevorrichtung zumindest nach Anspruch 5,
**dadurch gekennzeichnet, dass**
die Fixierlasche (30) des ersten Befestigungsquerträgers (16) zumindest im Wesentlichen parallel, versetzt zu dem Grundkörper (28) angeordnet ist, wobei der zweite Befestigungsquerträger (20) in einem fixierten Zustand zumindest teilweise zwischen dem Grundkörper (28) und der Fixierlasche (30) aufgenommen ist.

9. Pflanzstabhaltevorrichtung zumindest nach Anspruch 5,
**dadurch gekennzeichnet, dass**
die Fixierlasche (30) des ersten Befestigungsquerträgers (16) zumindest eine, eine Einführschräge ausbildende, abgeknickte Ecke (36) aufweist.

10. Pflanzstabhaltevorrichtung nach einem der vorhergehenden Ansprüche, **dadurch gekennzeichnet, dass**
der zweite Befestigungsquerträger (20) einen plattenförmigen Grundkörper (38) und zumindest eine an dem Grundkörper (38) angeordnete Fixierlasche (40) aufweist, die zu einer Fixierung des ersten Befestigungsquerträgers (16) relativ zu dem zweiten Befestigungsquerträger (20) vorgesehen ist.

11. Pflanzstabhaltevorrichtung nach Anspruch 5 und 10,
**dadurch gekennzeichnet, dass**
der plattenförmige Grundkörper (38) und die Fixierlasche (40) des zweiten Befestigungsquerträgers (20) zumindest im Wesentlichen identisch zu dem plattenförmigen Grundkörper (28) und der Fixierlasche (30) des ersten Befestigungsquerträgers (16) ausgebildet sind.

12. Pflanzstabhaltevorrichtung nach einem der vorhergehenden Ansprüche, **dadurch gekennzeichnet, dass**
das zumindest eine Fixierelement (18, 18') des ersten Befestigungsquerträgers (16) und das zumindest eine Fixierelement (22, 22') des zweiten Befestigungsquerträgers (20) jeweils von einem Ankerstab, insbesondere einem Erdspieß, gebildet sind.
